# EUROPEAN PATENT SPECIFICATION

(11) **EP 3 782 842 B1**
(45) Date of publication and mention of the grant of the patent: **13.09.2023**
(21) Application number: 18927751.0
(22) Date of filing: 23.07.2018
(51) Int. Cl.: B60L 5/18, B60L 5/26, B60L 5/20, B60L 5/32

(54) **PANTOGRAPH**
STROMABNEHMER
PANTOGRAPHE

(43) Date of publication of application: 24.02.2021
(73) Proprietor: Toyo Electric MFG. Co., Ltd., Tokyo 103-0028 (JP)
(72) Inventor: KOBAYASHI, Hayato, Yokohama-shi, Kanagawa 236-0004 (JP); NAKAJIMA, Shinji, Yokohama-shi, Kanagawa 236-0004 (JP)
(74) Representative: Haseltine Lake Kempner LLP
(86) International application number: PCT/JP2018/027567
(87) International publication number: WO 2020/021606

(56) References cited:
- EP-A1- 0 395 504
- EP-A1- 0 462 909
- EP-A1- 1 272 370
- JP-A- S5 546 805
- JP-A- H03 103 002
- JP-A- 2000 152 406
- JP-A- 2007 124 804
- JP-A- 2007 189 754
- JP-A- 2017 011 784
- JP-U- S60 144 702
- US-A1- 2007 272 506

## Description

### Technical Field

The present invention relates to, as a premise that width and height directions of a car of a railway or the like are a y-axis direction and a z-direction, respectively, a pantograph which is provided with a collector shoe having a slider longitudinal in the y-axis direction, which collects electric currents by coming into sliding contact with overhead wires, and a shoe body supporting the slider, a shoe supporting member supporting the collector shoe at a center part in the y-direction of the collector shoe, a framework which has upper and lower frames bendable and stretchable in the z-axis direction and supports the shoe supporting member at an upper end of the upper frame, an underframe supporting the framework, a first balancing link constantly holding postures of the collector shoe by screwing an upper of the first balancing link with the shoe supporting member and by screwing a lower end of the first balancing link with an upper end of the lower frame, and a second balancing link causing the upper frame to swing in respect to swinging of the lower frame by screwing an upper end of the second balancing link with a lower end and by screwing a lower end of the second balancing link with the underframe.

### Background Art

Conventionally, there has been known a pantograph with which an automatic descending device having an air tube connected with an air duct provided in the slider and supplying air in the air duct, which automatically descends the collector shoe by bending the framework on the underframe when an inner air pressure in the air duct is equal to or under a prescribed pressure. See a following first reference. When the slider is broken by excessive external forces while cars run, since the inner air pressure of the air duct is lowered, the automatic descending device causes the collector shoe to automatically descend based on detection of lowering of the inner air pressure in the air duct.

However, since it is necessary for the pantograph as above-mentioned to route the air tube from the underframe to the collector shoe by biding the air tube along an outer face of the framework, the air tube exposes and therefore such problems that the exposing air tube become a noise source because the exposing air tube is air resistance while cars run, the air tube easily deteriorate in air and rain, and misdetection of the inner air pressure of the air duct as deterioration are brought about.

### Reference(s)

### Patent Document(s)

A first reference: Japanese Patent Publication No. 2007-189754. In addition, EP0395504 discloses a device (1) for regulating the pressure force of a pantograph of a railway train on a catenary wire. EP1272370 discloses a composite mounting bracket and pantograph bow contact which are lighter, more corrosion-resistant and easier to produce. EP0462909 discloses a pantograph wearing strip serving for the transfer of electrical energy to rolling stock and comprising a damage detector device. JP2007124804 discloses the precharacterizing features of claim 1 below.

### Summary of Invention

### Technical Problems

The present invention was made in the circumstances above-mentioned and has an object to provide a pantograph that noises are reduced by sufficiently suppressing exposition of an air tube which an automatic descending device has and is suppressed misdetection by suppressing to deteriorate the air tube.

### Solution to Problems

To solve the problems above-mentioned, one of the aspects of the present invention provides a pantograph having the features of claim 1 below.

According to one of the aspects of the present invention, since the air tube is provided by insertion into the upper and lower frames of the framework from the air duct provided in the slider via the shoe supporting member supporting the collector shoe at a center part in the y-direction of the collector shoe, exposition of the air tube is sufficiently suppressed. Therefore, noise reduction is suppressed by reduction of air resistance while cars run, deterioration of the air tube is also suppressed because the air tube is suppressed to be exposed in wind and rain, and misdetection of the inner air pressure in the air duct is sufficiently suppressed.

Another aspect of the present invention provides the pantograph as above-mentioned, wherein the first balancing link is inserted into the upper frame of the frame work, the second balancing link is inserted into the lower frame of the framework, and the air tube is inserted into the upper and lower frames in a condition where the air tube is bound on the first and second links. According to another aspect of the present invention, since the air tube is inserted into the upper and lower frames in a condition where the air tube is bound on the first and second balancing link, the air tube is easily provided.

Another aspect of the present invention provides the pantograph as claimed as above-mentioned, wherein a hollowed top cover supporting and surrounding the shoe supporting member is provided with an upper end of the upper frame of the frame work. and the air tube is housed in the top cover and is housed in a hollowed hinge cover surrounding a connecting part of the first and second frames of the frame work and is housed in a hollowed lower cover surrounding the underframe. According to another aspect of the present invention, since the air tube is housed in the top cover, the hinge cover and the lower cover, exposition of the air tube and noise reduction and misdetection while cars run are more sufficiently suppressed.

### Brief Description of the Drawings

Fig. 1 is a perspective view showing a main part of one of the embodiments of a pantograph.
Fig. 2 is a perspective view showing a main part of the pantograph as shown in Fig. 1 from the other side of the x-axis direction.
Fig. 3 is a cross section along an A-A line of the pantograph shown in Fig. 2.
Fig. 4 is a cross section of a main part of the pantograph shown in Fig. 3.
Fig. 5 is a schematic cross section showing the framework of the pantograph shown in Fig. 1 and an enlarged cross section of a main connecting part of upper and lower frames.
Fig. 6 is a cross section along B-B line of a connecting part of upper and lower frames shown in Fig. 5.
Fig.7 is a schematic diagram showing air circuits of an automatic descending device of a pantograph.

### Description of Embodiments

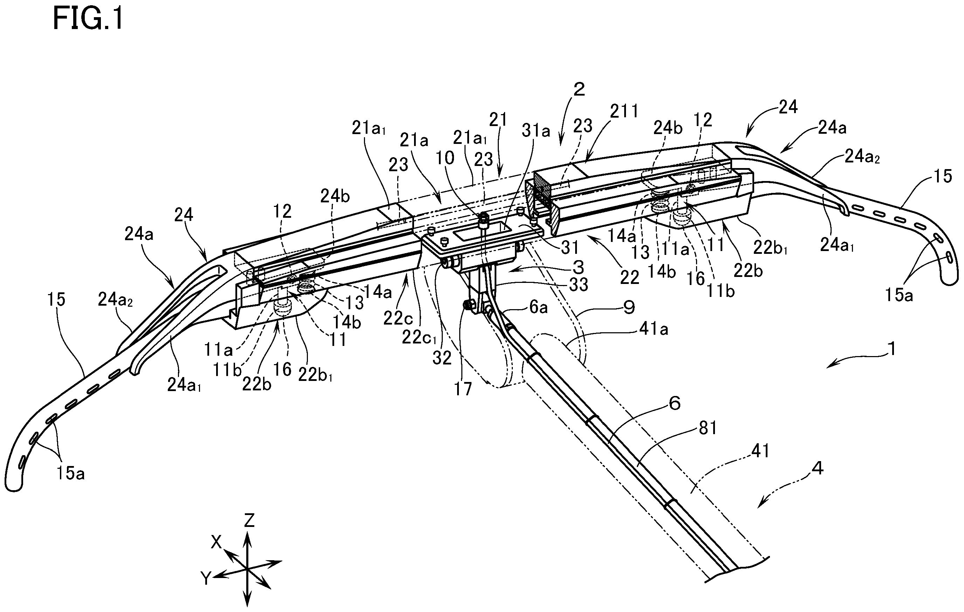

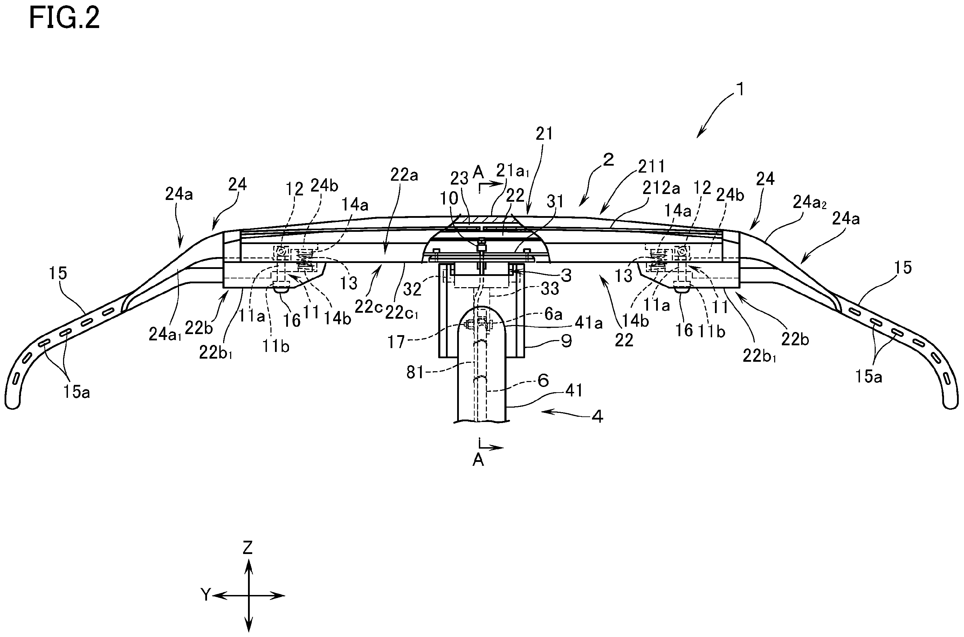

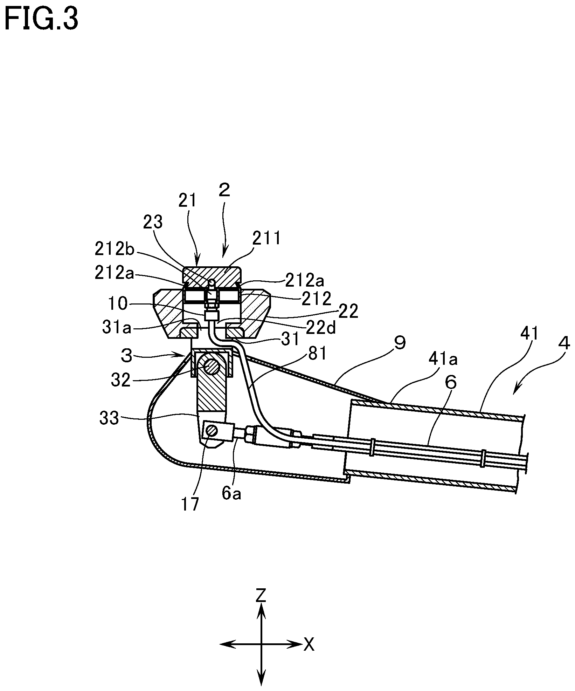

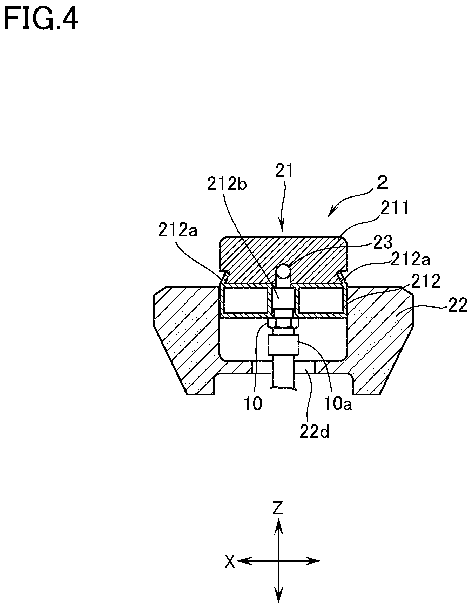

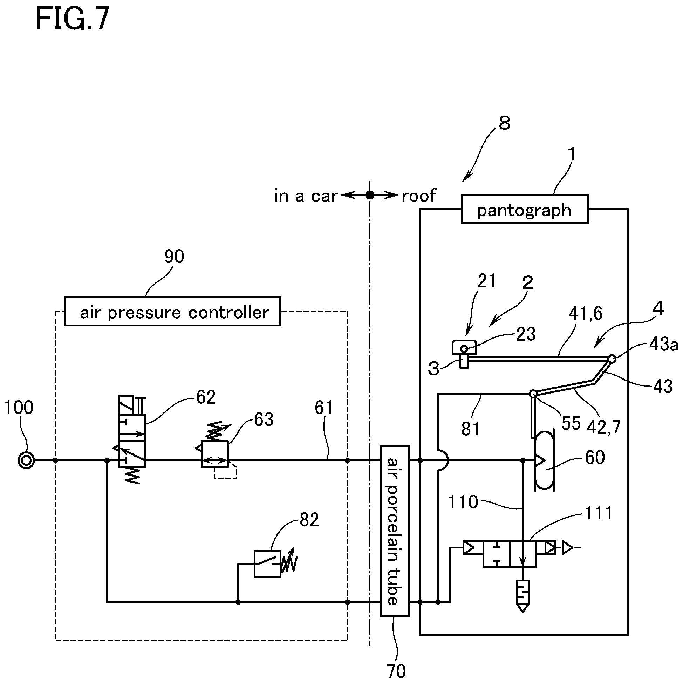

Referring to Figs. 1 to 5, a pantograph 1 of this embodiment belongs to so-called a single arm pantograph. As a premise that width and height directions of a car are a y-axis direction and a z-axis direction, respectively, the pantograph 1 is provided with a collector shoe 2 having a slider 21 collecting electric currents by coming into sliding contact with overhead wires, which is longitudinal in the y-axis direction, and a shoe body 22 supporting the slider 21, a shoe supporting member 3 supporting the collector shoe 2 at a center part of the collector shoe 2, a framework 4 having an upper frame 41 and a lower frame 42 bendably and stretchably connected with each other and supporting the shoe supporting member 3 at an upper end 41a of the upper frame 41, and underframe 5 supporting the frame work 4. The pantograph 1 is also provided with a first balancing link 6 constantly holding postures of the collector shoe 2 by screwing an upper end 41a with the shoe supporting member 3 and by screwing a lower end 41b with an upper end 42a of the lower frame 42, and a second balancing link 7 causing the upper frame 41 to swing in respect to swinging of the lower frame 42 by screwing the upper end 42a with the lower end 41b and by screwing a lower end 42b with the underframe 5. The pantograph 1 is further provided with an automatic descending device 8 having an air tube 81 (referring to Fig. 7) connected with an air duct 23 provided in the slider 21 and supplying air in the air duct 23, which automatically descends the collector shoe 2 by bending the framework 4 on the underframe 5 when an inner air pressure in the air duct 23 is equal to or under a prescribed pressure. The upper and lower frames 41 and 42 of the framework 4 are made of a hollow member, respectively, and the air tube 81 is connected with the air duct 23 at a center part in the y-axis direction of the slider 21 and is inserted into the upper and lower frame 41 and 42 of the framework 4 via the shoe supporting member 3 in the pantograph 1.

Additionally, the first balancing link 6 is inserted into the upper frame 41 of the framework 4 and the second balancing link 7 is inserted into the lower frame 42 of the framework 4 in the pantograph 1. The air tube 81 is inserted into the upper and lower frames 41 and 42 in the bound condition of the air tube 81 on the first and second links 6 and 7. A hollowed top cover 9 supporting and surrounding the shoe supporting member 3 is mounted at the upper end 41a of the upper frame 41.

Specifically, the slider 21 has an upper face 21a coming into sliding contact with overhead wires and collects electric currents. The upper face 21a is convex and at least a top of the upper face 21a is a curved face 21ai. A curvature of the curved face 21ai is, for example, R10000 which meets an industrial regulation EN50367. The slider 21 is provided with a slider body 211 having an upper face 21a and a carrier 212 to which the slider body 211 fitted. The slider body 211 is integrally molded from such carbon as any of electric conductive materials and a bottom face downward in the z-axis direction is a plane. The carrier 212 is a hollowed member and both of upper and lower faces are planes. The slider body 211 is stably put on the upper face of the carrier 212. A pair of claws 212a stand at one side and the other side in the x-axis direction of an upper end of the carrier 212. One of the claws 212a located at one side in the x-axis direction of the upper end of the carrier 212 inclines upward in the z-axis direction and toward the other side in the x-axis direction and the other of claws 212a located at the other side in the x-axis direction of the top end of the carrier 212 inclines upward in the z-axis direction and toward one side in the x-axis direction. One and the other sides in the x-axis direction of the slider body 211 is engaged with the claws 212a, respectively, and the slider body 211 is fitted to the carrier 212. The carrier 212 is integrally molded from light metals including aluminum. An air connector 10 is fitted to a bottom center part in the y-direction of the carrier 212. The air connector 10 communicates to the air duct 23 in the slider 21 through a hollowed part 212b of the carrier 212.

A pair of auxiliary horns 24 are provided with the slider 21. One of the auxiliary horns 24 is located at one side end of the slider 21 and protrudes from one side end of the y-axis direction and the other auxiliary horn 4 is located at the other side end of the slider 21 and protrudes from the other side end of the y-axis direction. Each of the auxiliary horns 24 has a bifurcate auxiliary horn body 24a inclining downward in the z-axis direction and toward the y-axis direction and a joint part 24b extending opposite to a protrusion direction of the auxiliary horn 24. One of the joint parts 24b protruding in one side of the y-axis direction is fastened on a bottom part of one end in the y-axis direction of the carrier 212, and the other joint part 24b protruding in the other side of the y-axis direction is fastened on a bottom part of the other end in the y-axis direction of the carrier 212. Each of the auxiliary horns 24 is connected with the slider 21. Each of a pair of rod assemblies 11 is fixed to a part by a pin 12, which is located adjacent to the fastened part of the joint part 24b and the carrier 212. Each of the rod assemblies 11 is provided with a rod body 11a and an outer peripheral part of a lower part of the rod body 11a is grooved. Each of a pair of elastic member guide 14a, into which an upper part in the z-axis direction of each of a pair of elastic member 13 such as a coil spring is inserted and which holds the elastic member 13, is protruded downward in the z-axis direction at a part located opposite to the fastened part of the carrier 212 across the rod assembly 11.

The shoe body 22 has a hollow portion 22a opened upward in the z-axis direction and extending a full length in the y-axis direction of the shoe body 22, and a pair of slider supporting parts 22b located at one and the other ends of the y-axis direction of the slider 22, respectively. Each of the elastic members 13 is housed in the hollow portion 22a of each of the slider supporting parts 22b, and the elastic member guide 14b protrudes upward in the z-axis direction at an inner bottom face of each of the slider supporting parts 22b, which is located above the elastic member guide 14a. The elastic member guide 14b is inserted into a lower part of the elastic member 13. Accordingly, each of the elastic member 13 pushes the slider 21 upward in the z-axis direction and the upper face 21a of the slider 21 protrudes from an upper end in the z-axis direction of the slider 22. The rod body 11a of the rod assembly 11 has a length that a lower end of the z-axis direction of the rod body 11a reaches the inner bottom face of the slider supporting part 22b. Further, the collector shoe 2 has a pair of horns 15. One of the horns 15 protrudes from the hollow portion 22a of the shoe body 22 to one side of the y-axis direction and the other horn 15 protrudes from the hollow portion 22a of the shoe body 22 to the other side in the z-axis direction. Both of the horns 15 are arched downward in the z-axis direction. Each of the horns 15 is fastened to the inner bottom face of the slider supporting part 22b of the shoe body 22. A plurality of holes 15a, adjacent two of which are located apart at a prescribed distance, pierce the horn 15 in the x-axis direction at an arched part of the horns 15. All of the holes 15a suppress generation of Karman vortex at the horns 15 and backward in a running direction of cars by air flows in and out the holes 15a, and contribute to reduction of aerodynamic noise. A position of a bottom face 22ci except parts of the slider supporting parts 22b is higher in the z-direction than bottom faces 22bi of the slider supporting parts 22b. The part 22c having the bottom face 22ci is thinner in the z-axis direction than the slider supporting parts 22b. Therefore, the collector shoe 2 is lighter than any of the conventional ones and reduces air resistance while cars run.

The collector shoe 2 is assembled in the condition where the elastic member guide 14b provided on the inner bottom face of each of the slider supporting parts 22b is inserted into the lower part in the z-axis direction of each of the elastic members 13, each of pins 12 is inserted into the joint part 25b of each of the auxiliary horns 24 connected with the slider 21, and each of the rod assemblies 11 is fitted. Specifically, the joint parts 24b of the auxiliary horns 24 and the carrier 212 of the slider 21 are inserted into the hollow portion 22a of the shoe body 22 downward in the z-axis direction. At this time, the elastic member guide 14a is inserted into the upper end in the z-axis direction of the elastic member 13, the lower end of each of the rod bodies 11a is inserted into each of a pair of bushes 11b. In this condition, each of a pair of cap nuts 16 is screwed with the outer peripheral end part of each of the rod body 11a upward in the z-axis direction. As the cap nut 16 is screwed, each of the elastic members 13 is compressed between the joint part 24b and the slider supporting part 22b and each of the elastic members 13 pushes the slider 21 upward in the x-direction. As a result, the slider 21 is housed in the hollow portion 22a of the shoe body 22 with pushing upward in the z-axis direction, the upper face 21a protrudes from the upper ends in the z-axis direction of the shoe body 22, and the slider 21 is supported by each of the slider supporting parts 22b. In the supported condition of the slider 21 by each of the slider supporting parts 22b, it is possible for the slider 21 to move up and down in the z-axis direction in the hollow portion 22a of the shoe body 22, but to suppress movements in both of the x-axis and y-axis directions by each of the cap nuts 16 and therefore the slider 21 does not drop off from the shoe body 22. Additionally, the movements upward and downward in the z-axis direction is restricted by screwing of the cap nuts 16. When the slider 21 and the shoe body 22 are assembled, each of the horns 15 is interposed downward in the z-axis direction between one part 24ai and the other part 24a₂ of each of the bifurcate auxiliary horns 24. The horns 15 and the auxiliary horns 24 induce the upper face 21a of the slider 21 from jumper wires to next overhead wires.

An opening 22d piercing in the z-direction is formed at a center part in the y-direction of the bottom part of the shoe body 22. An upper end 31 of the shoe supporting member 3 is fastened at a center part in the y-direction of the bottom part of the shoe body 22 by overlaying the opening 22d and a hole 31a piecing the upper end 31 of the shoe supporting member 3 in the z-axis direction. The upper end 31 of the shoe supporting member 3 is screwed with a lower part 33 of the shoe supporting member 3 by a pin 32. The air connector 10 through the hole 31a and the opening 22d is inserted into the hollow part 22a of the shoe body 22 and is fitted to the carrier 212. An upper part of the first balancing link 6 protrudes from an upper end 41a of the upper frame 4 outward and is screwed the lower part 33 of the shoe supporting member 3 by a shaft 17 extending in the y-direction. The air tube 81 passes near an outer face of the lower part 33 of the shoe supporting member 3 and is connected with a lower end 10a of the air connector 10 via hole 31a and opening 22d. The hollowed top cover 9 provided at the upper end 41a of the upper frame 41 is connected with the shoe supporting member 3, and supports and surrounds the shoe supporting member 3. The upper end 6a of the first balancing rink 6 and a part of the air tube 81 extending from opening 22d of the shoe body 22 to the upper end 41a of the upper frame 41 are housed in the top cover 9.

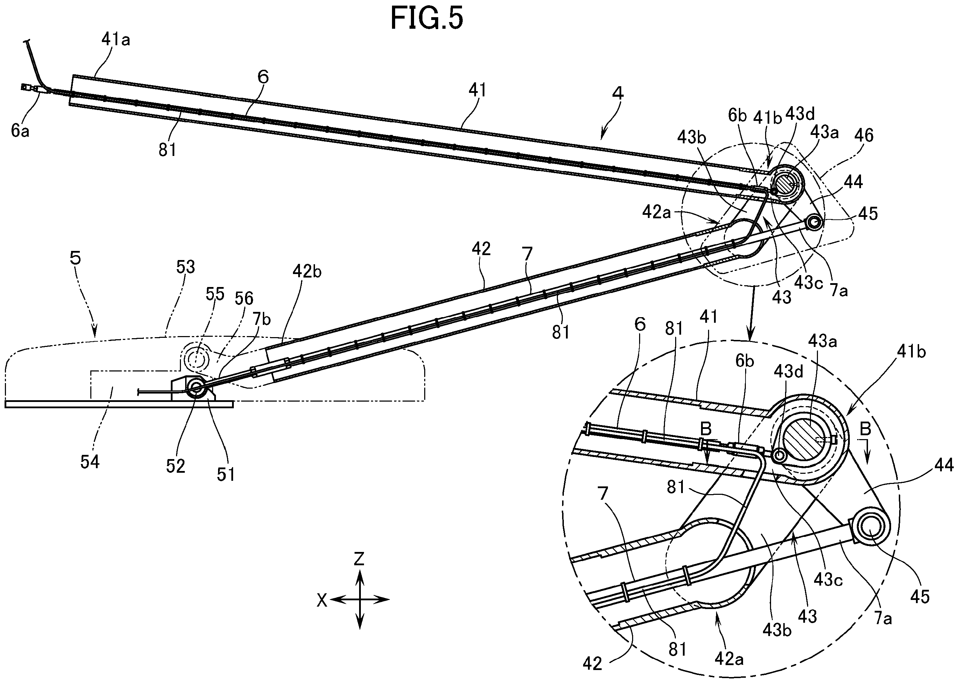

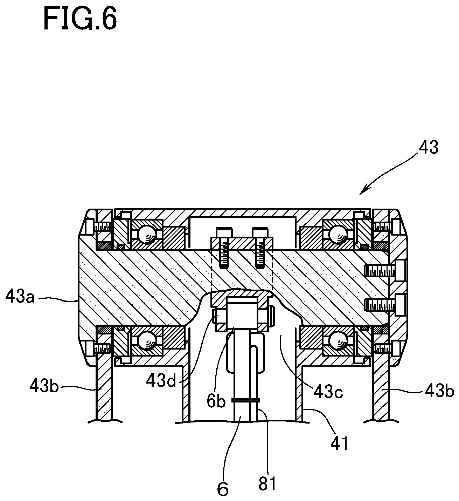

Referring to Figs. 5 and 6, the lower end 41b of the upper frame 41 and an upper end 42a of the lower frame 42 is bendably and stretchably connected with each other by a hinge 43. The hinge 43 is provided with a shaft 43a and a pair of fork arms 43b. Each of the fork arms 43b directs to one side of the x-ais direction and extends downward in the z-axis direction. The fork arms 43b are located apart from each other at a prescribed distance. Each of the fork arms 43b is screwed with the shaft 43a and the upper end 42a of the lower frame 42. On the other hand, the hinge 43 consists of a part of the upper end 42a of the lower frame 42. The lower end 41b of the upper frame 41 is screws with the upper end 42a of the lower frame 42 by the shaft 43a. Specifically, the lower end 41b of the first balancing link 6 is screwed with a pin 43d at a hollowed part 43c provided in the shaft 43a of the hinge 43. Therefore, the lower end 42b of the lower frame 42 freely swings. The air tube 81 is inserted into the hollowed part 43c, drawn to a side of the fork arm 43b, and is inserted into the lower frame 42 from the upper end 42a of the lower frame 42. A connecting member 44 directing to the other side in the x-axis direction and downward in the z-axis direction is provided at the lower end 41b of the upper frame 41 and consists of a part of the lower end 41b of the upper frame 41. The second link 7 protrudes outward from the upper end 42a and the lower end 42b of the lower frame 42. An upper end 7a of the second balancing frame 7 located at a side of the hinge 43 is screwed with a lower end in the z-axis direction of the connecting member 44 by a shaft 45. Therefore, the upper end 7a of the second balancing link 7 is screwed with the lower end 41b of the upper frame 41. On the other hand, the lower end 7b of the second balancing link 7, which is located at a side of the underframe 5, is screwed with a bracket 51 standing upward in the z-axis direction on the underframe 5 by a pin 52. A s a result, the lower end 7b of the second balancing frame 7 is screwed with the underframe 5. The lower end 41b of the upper frame 41 including the connecting member 44, the upper end 42a of the lower frame 42 including the hinge 43, and the upper end 7a of the second balancing link 7, which consist a connecting part of the upper frame 41 and the lower frame 42, are surrounded by and housed in a hollowed hinge cover 46.

The air tube 81 is drawn outward from the lower end 42b of the lower frame 42, directs to a side of the underframe 5 in a condition where the air tube 81 is bound on the lower end 7b of the second balancing link 7, and is inserted into a hollowed lower cover 53 surrounding the underframe 5. The lower end 42b of the lower frame 42 is screwed with the underframe 5 by a main shaft 55 provided at a supporting member 54 housed in the lower cover 53. The supporting member 54 stands upward in the z-axis direction from the underframe 5 and the main shaft 55 is provided at an upper end of the supporting member 54. A pair of connecting plates 56 extending to the supporting member 54 are screwed with the lower end 42b of the lower frame 42 by the main shaft 55. The lower end 42b of the lower frame 42, the lower end 7b of the second balancing link 7 and both of the connecting plates 56 as well as the air tube 81 and the supporting member 54 are surrounded by and housed in the lower cover 53.

Referring to Fig.7, the pantograph 1 is provided with an air spring 60 which is a power source for bending and stretching the upper and lower frames 41 and 42 of the framework 4 and generates a torque for rotatably moving the main shaft 55 in one and the other directions. One end of an air passage 61 supplying air in the air spring 60 is connected with an air pressure controller 90 via an air porcelain tube 70 mounted on a roof of a car and the other end of the air passage 61 is connected with an air source 100. An upstream side of the air pressure controller 90 is provided with an electromagnetic valve 62 for suppling and stopping air to the air spring 60 and a downstream side of the air pressure controller 90 is provided with a regulator 63 for constantly holding air pressures prescribed ones. The air tube 81 is connected with the air passage 61 at the upstream side from the electromagnetic valve 62 in the air pressure controller 90. A pressure sensor 82 detecting inner air pressures of the air duct 23 of the slider 21 is interposed in the air tube 81. The automatic descending device 8 of the pantograph 1 is provided with a bypass passage 110 which is branched from the air passage 61 and is connected with the air tube 81. A rapidly exhausting valve 111 for exhausting air supplied in the air spring 60 is interposed in the bypass passage 110.

In the automatic descending device 8, when the electromagnetic valve 62 is opened by the air pressure controller 90 and air is supplied in the air spring 60 through the air passage 61 from the air source 100, a torque is loaded on the main shaft 55 and the main shaft 55 rotatably moves in one direction and, thereby, the lower frame 42 shown in Fig. 5 swings upward in the z-axis direction. The upper frame 41 swings upward in the z-axis direction in respect to swinging of the lower frame 42. As a result, the frame work 4 automatically stretches upward in the z-axis direction and the upper face 21a of the slider 21 of the collector shoe 2 comes into contact with the overhead wires. On the other hand, when air fully supplied in the air spring 60 is exhausted, the main shaft 55 rotatably moves in the other direction, the lower frame 42 swings downward in the z-axis direction, the upper frame 41 swings downward in the z-axis direction, the frame work 4 is bended on the underframe 5, and the collector shoe 2 automatically descends. Additionally, in the automatically descending device 8, when the slider 21 is broken by loading excessive external forces on the slider 21 while cars run, as air fully supplied in the air duct 23 is leaked from the slider 21, the inner pressure of the air duct 23 descends. Subsequently, when the inner air detected by the pressure sensor 82 becomes equal to or lower than a prescribed air pressure set in a memory provided with the air pressure controller 90, the air pressure controller 90 closes the electromagnetic valve 62 and opens the rapidly exhausting valve 111, and immediately exhausts air fully supplied in the air spring 60 outward. The frame work 4 is bent on the underframe 5 accompanied by the immediate exhaustion and therefore the collector shoe 2 descends.

In the pantograph 1, since the air tube 81 is inserted from the air duct 23 in the slider 21 into the upper and lower frames 41 and 42 of the frame work 4 via the supporting member 3 supporting the collector shoe 2 at the center part in the y-axis direction of the collector shoe 2, exposure of the air tube 81 is sufficiently suppressed. Therefore, since the air tube 81 is suppressed to be exposed in wind and rain, deterioration of the air tube 81 is suppressed and misdetection of inner air pressure of the air duct 23 as well as noise reduction by reducing air resistance while cars run is suppressed. Additionally, since the air tube 81 is inserted into the upper and lower frames 41 and 42 of the framework 4 in the condition where the air tube 81 is bound on the first and second balancing links 6 and 7, the air tube 81 is easily provided. Further, since the air tube 81 is housed in the top cover 9, the hinge cover 45, and lower cover 53, exposure of the air tube 81 is more sufficiently suppressed and noise reduction while cars run and suppression of misdetection are improved.

One of the embodiments of the present invention is described with reference to figures. However, the present invention is not restricted to the embodiment as above-mentioned. Additionally, a structure of an air circuit in an automatically descending device is not restricted to the embodiment as above-mentioned.

### Expression of symbols

- 1: Pantograph
- 2: Collector shoe
- 21: Slider
- 22: Slider body
- 23: Air duct
- 3: Shoe supporting member
- 33: Lower end of shoe supporting member 3
- 4: Framework
- 41: Upper frame
- 41a: Upper end of upper frame 41
- 41b: Lower end of upper frame 41
- 42: Lower frame
- 42a: Upper end of lower frame 42
- 42b: Lower end of lower frame 42
- 46: Hinge cover
- 5: Underframe
- 53: lower cover
- 6: First balancing link
- 6a: Upper end of first balancing link 6
- 6b: Lower end of first balancing link 6
- 7: Second balancing link
- 7a: Upper end of second balancing link 7
- 7b: Lower end of second balancing link 7
- 8: Automatic descending device
- 81: Air tube
- 9: Top cover

## Claims

1. A pantograph (1) comprising, as a premise that width and height directions of a car are a y-axis direction and a z-direction, respectively,
- a collector shoe (2) having a slider (21) longitudinal in the y-axis direction, which collects electric currents by coming into sliding contact with overhead wires, and a shoe body (211) supporting the slider (21), and a shoe supporting member (3) supporting the collector shoe (2) at a center part in the y-direction of the collector shoe (2);
- a framework (4) which has upper and lower frames (41, 42) bendable and stretchable in the z-axis direction and supports the shoe supporting member (3) at an end of the upper frame (41);
- an underframe (5) supporting the framework (4);
- a first balancing link (6) constantly holding postures of the collector shoe (2) by screwing an upper end (6a) of the first balancing link (6) with the shoe supporting member (3) and by screwing a lower end (6b) of the first balancing link (6) with an upper end (42a) of the lower frame (42);
- a second balancing link (7) causing the upper frame (41) to swing in respect to swinging of the lower frame (42) by screwing an upper end (7a) of the second balancing link (7) with a lower end (41b) of the upper frame (41) and by screwing a lower end (7b) of the second balancing link (7) with the underframe (5); and
- an automatic descending device (8) having an air tube (81) connected with an air duct (23) and supplying air in the air duct (23), which automatically descends the collector shoe (2) by bending the framework (4) on the underframe (5) when an inner air pressure in the air duct (23) is equal to or under a prescribed pressure;
**characterized in that**:
- the air duct (23) is provided in the slider (21);
- the upper and lower frames (41, 42) of the framework (4) are made of a hollow member; and
- the air tube (81) is connected with the air duct (23) in a center part in the y-axis direction of the slider (21) and is inserted into the upper and lower frames (41, 42) of the framework (4) via the shoe supporting member (3).

2. The pantograph (1) as claimed in claim 1, wherein the first balancing link (6) is inserted into the upper frame (41) of the frame work (4), the second balancing link (7) is inserted into the lower frame (42) of the framework (4), and the air tube (81) is inserted into the upper and lower frames (41, 42) in a condition where the air tube (81) is bound on the first and second links (6, 7).

3. The pantograph (1) as claimed in claim 1 or 2, wherein a hollowed top cover (9) supporting and surrounding the shoe supporting member (3) is provided with an upper end (41a) of the upper frame (41) of the framework(4), and the air tube (81) is housed in the top cover (9) and is housed in a hollowed hinge cover (46) surrounding a connecting part of the first and second frames (41, 42) of the frame work (4) and is housed in a hollowed lower cover (53) surrounding the underframe (5).

## Patentansprüche

1. Stromabnehmer (1), der unter der Voraussetzung, dass die Breiten- und Höhenrichtung eines Wagens jeweils eine y-Achsenrichtung und eine z-Richtung sind, Folgendes umfasst:
- einen Kollektorschuh (2) mit einem in der y-Achsenrichtung längs verlaufenden Schieber (21), der elektrische Ströme sammelt, indem er mit Oberleitungen in Gleitkontakt kommt, und einem Schuhkörper (211), der den Schieber (21) trägt, und einem Schuhstützelement (3), das den Kollektorschuh (2) an einem Mittelteil in der y-Richtung des Kollektorschuhs (2) trägt;
- eine Rahmenstruktur (4), die einen oberen und einen unteren Rahmen (41, 42) aufweist, die in z-Achsenrichtung biegbar und dehnbar sind und das Schuhstützelement (3) an einem Ende des oberen Rahmens (41) trägt;
- einen Unterrahmen (5), der die Rahmenstruktur (4) trägt;
- ein erstes Ausgleichsglied (6), das die Stellungen des Kollektorschuhs (2) ständig beibehält, indem ein oberes Ende (6a) des ersten Ausgleichsglieds (6) mit dem Schuhstützelement (3) verschraubt wird und ein unteres Ende (6b) des ersten Ausgleichsglieds (6) mit einem oberen Ende (42a) des unteren Rahmens (42) verschraubt wird;
- ein zweites Ausgleichsglied (7), das bewirkt, dass der obere Rahmen (41) im Verhältnis zum Schwingen des unteren Rahmens (42) schwingt, indem ein oberes Ende (7a) des zweiten Ausgleichsglieds (7) mit einem unteren Ende (41b) des oberen Rahmens (41) verschraubt wird und ein unteres Ende (7b) des zweiten Ausgleichsglieds (7) mit dem Unterrahmen (5) verschraubt wird; und
- eine automatische Absenkvorrichtung (8), die einen Luftschlauch (81) aufweist, der mit einem Luftkanal (23) verbunden ist und Luft in den Luftkanal (23) einbringt, die den Kollektorschuh (2) durch Biegen der Rahmenstruktur (4) automatisch auf den Unterrahmen (5) absenkt, wenn ein Innenluftdruck im Luftkanal (23) einem vorgeschriebenen Druck entspricht oder darunter liegt;
**dadurch gekennzeichnet, dass**:
- der Luftkanal (23) in dem Schieber (21) bereitgestellt ist;
- der obere und der untere Rahmen (41, 42) der Rahmenstruktur (4) aus einem Hohlelement bestehen; und
- der Luftschlauch (81) in einem Mittelteil in y-Achsenrichtung des Schiebers (21) mit dem Luftkanal (23) verbunden ist und über das Schuhstützelement (3) in den oberen und unteren Rahmen (41, 42) der Rahmenstruktur (4) eingesetzt ist.

2. Stromabnehmer (1) nach Anspruch 1, wobei das erste Ausgleichsglied (6) in den oberen Rahmen (41) der Rahmenstruktur (4) eingesetzt ist, das zweite Ausgleichsglied (7) in den unteren Rahmen (42) der Rahmenstruktur (4) eingesetzt ist und der Luftschlauch (81) in den oberen und unteren Rahmen (41, 42) in einem Zustand eingesetzt ist, in dem der Luftschlauch (81) an dem ersten und dem zweiten Glied (6, 7) befestigt ist.

3. Stromabnehmer (1) nach Anspruch 1 oder 2, wobei eine ausgehöhlte obere Abdeckung (9), die das Schuhstützelement (3) trägt und umgibt, an einem oberen Ende (41a) des oberen Rahmens (41) der Rahmenstruktur (4) bereitgestellt ist und der Luftschlauch (81) in der oberen Abdeckung (9) aufgenommen ist und in einer ausgehöhlten Scharnierabdeckung (46) aufgenommen ist, die einen Verbindungsteil des ersten und zweiten Rahmens (41, 42) der Rahmenstruktur (4) umgibt, und in einer ausgehöhlten unteren Abdeckung (53) aufgenommen ist, die den Unterrahmen (5) umgibt.

## Revendications

1. Pantographe (1) comprenant, comme prémisse, que les directions de la largeur et de la hauteur d'une voiture sont respectivement une direction de l'axe y et une direction de l'axe z,
- un sabot collecteur (2) ayant un coulisseau (21) longitudinal dans la direction de l'axe y, qui collecte des courants électriques en entrant en contact par glissement avec des fils aériens, et un corps de sabot (211) supportant le coulisseau (21), et un élément de support de sabot (3) supportant le sabot collecteur (2) au niveau d'une partie centrale dans la direction y du sabot collecteur (2) ;
- un cadre (4) qui a des cadres supérieur et inférieur (41, 42) pliables et extensibles dans la direction de l'axe z et supporte l'élément de support de chaussure (3) à une extrémité du cadre supérieur (41) ;
- un châssis (5) supportant le cadre (4) ;
- un premier maillon d'équilibrage (6) maintenant constamment les postures du sabot collecteur (2) en vissant une extrémité supérieure (6a) du premier maillon d'équilibrage (6) avec l'élément de support de sabot (3) et en vissant une extrémité inférieure (6b) du premier maillon d'équilibrage (6) avec une extrémité supérieure (42a) du cadre inférieur (42) ;
- un second maillon d'équilibrage (7) faisant osciller le cadre supérieur (41) par rapport à l'oscillation du cadre inférieur (42) en vissant une extrémité supérieure (7a) du second maillon d'équilibrage (7) avec une extrémité inférieure (41b) du cadre supérieur (41) et en vissant une extrémité inférieure (7b) du second maillon d'équilibrage (7) avec le châssis (5) ; et
- un dispositif de descente automatique (8) ayant un tube à air (81) relié à un conduit d'air (23) et fournissant de l'air dans le conduit d'air (23), qui descend automatiquement le sabot collecteur (2) en pliant le cadre (4) sur le châssis (5) lorsqu'une pression d'air intérieure dans le conduit d'air (23) est égale ou inférieure à une pression prescrite ;
**caractérisé en ce que** :
- le conduit d'air (23) est prévu dans le coulisseau (21) ;
- les cadres supérieur et inférieur (41, 42) du cadre (4) sont constitués d'un élément creux ; et
- le tube à air (81) est relié au conduit d'air (23) dans une partie centrale dans la direction de l'axe y du coulisseau (21) et est inséré dans les cadres supérieur et inférieur (41, 42) du cadre (4) via l'élément de support de sabot (3).

2. Pantographe (1) selon la revendication 1, dans lequel le premier maillon d'équilibrage (6) est inséré dans le cadre supérieur (41) du cadre (4), le second maillon d'équilibrage (7) est inséré dans le cadre inférieur (42) du cadre (4), et le tube à air (81) est inséré dans les cadres supérieur et inférieur (41, 42) dans une condition où le tube à air (81) est lié aux premier et second maillons (6, 7).

3. Pantographe (1) selon la revendication 1 ou 2, dans lequel un couvercle supérieur évidé (9) supportant et entourant l'élément de support de sabot (3) est pourvu d'une extrémité supérieure (41a) du cadre supérieur (41) du cadre (4), et le tube d'air (81) est logé dans le couvercle supérieur (9) et est logé dans un couvercle de charnière évidé (46) entourant une partie de connexion des premier et second cadres (41, 42) du cadre (4) et est logé dans un couvercle inférieur évidé (53) entourant le châssis (5).
